(19) Europäisches Patentamt
European Patent Office
Office européen des brevets

(11) **EP 4 261 741 A1**

(12) **EUROPEAN PATENT APPLICATION**

(43) Date of publication:
**18.10.2023 Bulletin 2023/42**

(21) Application number: **22168442.6**

(22) Date of filing: **14.04.2022**

(51) International Patent Classification (IPC):
**G06N 3/00** *(2023.01)*     **G06N 3/08** *(2023.01)*
**G06N 7/00** *(2023.01)*     G06N 3/04 *(2023.01)*
G05D 1/00 *(2006.01)*

(52) Cooperative Patent Classification (CPC):
**G06N 3/006; G06N 3/088; G06N 7/01;** G06N 3/045

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Ross, Chana**
  3095333 Zichron Yaakov (IL)
• **Di Castro, Dotan**
  3440619 Haifa (IL)
• **Miron, Yakov**
  3467929 Yakov (IL)
• **Goldfracht, Yuval**
  Haifa (IL)
• **Tessler, Chen**
  3508409 Haifa (IL)

(54) **APPARATUS AND COMPUTER-IMPLEMENTED METHOD OF LEARNING A POLICY FOR CONTROLLING A DOZER FOR A GRADING TASK**

(57)     The invention relates to a computer-implemented method of executing a behavioural cloning algorithm for self-supervised learning using recorded samples for a grading task with a dozer.

**Fig. 1**

EP 4 261 741 A1

**Description**

Background art

Dozers play a key role in most construction sites and are the go-to machinery for many tasks. While manual dozing is a well-established profession, it suffers currently from shortage in experienced drivers. Hence, it is desirable to provide an automation of a grading task, where a dozer is confronted with an uneven plot of land and automatically grade it to a target height. A dozer can be equipped with a blade and by pushing around the soil it is able to bring the plot to a target height.

DE 10 2022 202 689 discloses an approach to learn a policy for the dozer to accomplish the grading task, wherein the policy is learnt by utilizing a simulation of a working environment of the dozer.

As opposed to the real world, a good simulator provides several benefits. First, data collection does not require an expert human operator and can instead be obtained by running advanced heuristics on clean, privileged data. Second, simulations are configurable and as a result they enable the design of complex scenarios and data augmentation techniques. Moreover, simulations enable the domain expert to focus on the challenging parts of the task at hand. Finally, by leveraging a simulator one can not only collect data for training but also efficiently evaluate a policy within this task without the risk of failure in the real world.

However, it has been observed that policies learnt with clean and simplified simulated environment can fail catastrophically when facing real world scenarios.

Advantages of the invention

The inventors focus on deep neural networks (DNNs) for perception and decision making. Unlike classic rule-based methods, DNNs are trained to perform decisions based on collected data. While classic detection techniques rely on the ability to e.g., detect edges, a DNN is trained to extract more complex features. Doing so, it can overcome data imperfections such as missing information due to occlusions and measurement noise. Specifically, the inventors propose a novel imitation learning method, where the agent is trained on noisy data to imitate an expert, who has direct access to the perfect and noise-free measurements. The advantage thereof is that this learning paradigm learns a robust feature extractor, capable of overcoming the inaccuracies of real-world measurements.

Moreover, while methods that rely on classic detection techniques usually fail when applying them to real world situations, the proposed imitation learning method results in a robust policy owing to its generalization ability during training.

Summary of the invention

In a first aspect, a computer-implemented method for learning a policy configured to control an off-road vehicle is proposed. The off-road vehicle is configured to interact with granular material, e.g. at a construction site. The interaction can be understood in a way that the off-road vehicle can distribute the granular material. For instance, it can pick up, transport and drop off the granular material or otherwise move the granular material to another position.

The method starts with the step of providing a simulation of the working environment, wherein the simulation is suited to determine depending on at least an inputted action ($a$) of the off-road vehicle of a set of possible actions and a current state of the environment ($s_t$) an output, wherein the output characterizes the environment ($s_{t+1}$) after carrying out the inputted action. In particular the output is the subsequent state of the environment. The state of the environment can be a heigh map, in particular a heigh map of a field of view of the off-road vehicle.

Afterwards, it follows a step of generating a plurality of random initial states of the working environment. Under the term initial state can be understood that the state characterizes an environment which the off-road vehicle would see before carrying out its first action. The term random can be understood that the initial states are artificially created, e.g. by randomly placing piles in the working environment, wherein optionally the working environment is created artificially.

Afterwards, it follows a step of applying a baseline method to solve the grading task by means of the simulation. While solving the grading task with the baseline, observed tuples of actions and corresponding states ($o_t$, $a_t$) are recorded. The observed tuples can be referred to as a set or training data set ($D$). The baseline method can be a heuristic or selected actions by a human expert. Preferably, the actions are determined on the basis of an initial state of the simulated working environment, wherein piles of the granular material are detected and the closest pile is selected, wherein for the closest pile a heuristic algorithm comprising at least one heuristic is run to create proposal(s) according to said heuristic of a next forward action and a next lag starting point, wherein the optimal tuple of next forward action and optionally next lag starting point is selected from the proposals and the corresponding trajectory is carried out. The heuristic algorithm can generate for a given vehicle location and a closest pile classification some proposals as actions. Out of these proposals, one can select the proposal with the minimal (Euclidian) distance from the current vehicle location.

Afterwards, it follows a step of executing a behavioural cloning algorithm on the recodes tuples to optimize a parametrization of the policy with the objective to imitate the behaviour of the baseline, wherein a plurality of the recorded states is provided with added perturbations. In other words, the behavioral cloning algorithm is either applied on a mixture of recorded states and on recorded states that are perturbated or is applied only on recorded states that are perturbated. Behavioral cloning can be understood as a process of reconstructing a skill from an operator's behavioral traces by means of Machine Learning techniques. It is generally known that Behavior Cloning (BC) treats actions selected by an expert/oracle (e.g. the heuristic algortihm) as label's for training. The added perturbations can be obtained by reducing the volume of granular piles, spread randomly a diameter of the piles, depth measurement noise, occlusions and augmentations to the observation space, which have been generated from the states or observations.

Optionally, a step of outputting the optimized policy can be carried out.

Owing to the combination of applying a baseline on clean data and behavior cloning on perturbated data, the policy learns to overcome obstacles, namely noise and other interference's in the real world. These obstacles are not present in the simulation and adding them to the learning process adds the desired robustness to the policy.

It is proposed that the behavior cloning optimizes a loss function by means of supervised learning (e.g. gradient descent), wherein the loss function characterizes a difference between recorded actions ($a$) for given states ($o$) and chosen actions ($\pi_\theta(N(o))$) by the policy for the perturbated states ($N(o)$). This can be mathematically expressed as: $L(\theta, D) = E[||\pi_\theta(N(0)) - \alpha|||(s, a) \sim D]$.

Furthermore, it is proposed that the simulation is a simplified simulation of the working environment. Preferably, each pile of granular material is initially modeled as a Multivariate Gaussian Distribution, in particular with two variables (x, y), these variables are the cartesian coordinates of the height map, both taken from an i.i.d normal distribution.

Furthermore, it is proposed that the grading task is divided into three subtasks, wherein for each of the sub-tasks a policy is trained. In the initialization task, there is no graded area and a there are a few rows of dumped sand piles. The dozer needs to create an incline and reach a predefined target height. In the continuous task, the agent is located on top of the previously graded area, and sand piles are continuously being added to the vicinity of the graded area. Finally, in the edge task, the final row of the sand piles is dumped where most of the area is already graded, and the sand leftovers need to be cleared. The dozer is required to create a decline in order to flatten the sand and smooth the graded area. Each stage exhibits different challenges and can be simulated and tested individually. Hence, this approach results in more powerful policies and better overall performance for the grading task.

The state, in particular the environment height map, can be recorded using LiDARs, cameras or any other sensor from which the environment height map over time can be derived and vehicle sensors such as velocity, position, Euler angle, angular velocity, acceleration and any other important information about the vehicle position can be used for vehicle states.

The vehicle or off-road vehicle can be a dozer, bulldozer, compactor, dumper, earthmover, construction vehicle, heavy machinery, heavy-duty vehicle or any other type of vehicle which has a number of assignments or tasks that include interaction with the environment, more specifically the granular material. Examples for these type of assignments or tasks can be grading, dumping granular material, compacting an area, removing granular material etc. The granular material may include soil, sand, snow, rubble, rock and/or similar particulate material.

According to an embodiment, the method also comprises a step of controlling at least one actor of the off-road vehicle by means of a control signal determined using the policy, in particular determined in accordance with the outputted action of the policy. Such an embodiment offers the advantage that the vehicle can be controlled to perform actions and assignments in efficient manner.

Any method presented here may be implemented, for example, in software or hardware or in a mixture of software and hardware, for example in an apparatus or a controller.

The approach presented here also provides an apparatus configured to execute, control or implement by corresponding means the steps of a variant of a method presented here. The object underlying the invention can be achieved quickly and efficiently also by means of this embodiment of the invention in form of an apparatus.

To this end, the apparatus may comprise at least one computation unit for processing signals or data, at least one storage unit for storing signals or data, at least one interface to a sensor or an actuator reading sensor signals from the sensor or outputting data or control signals to the actuator, and/or at least a communication interface for reading or outputting data embedded in a communication protocol. For example, the computation unit may be a signal processor, a microcontroller or the like, wherein the storage unit may be flash storage an EEPROM or a magnetic storage unit. The communication interface may be configured to read or output data in a wireless and/or wired manner, wherein a communication interface capable of reading or outputting wired data may read data electrically or optically from a corresponding data transmission line or output the same to a corresponding data transmission line, for example.

An apparatus may be understood as an electric device processing sensor signals and outputting control and/or data signals depending thereon. The apparatus may comprise an interface realised in hardware and/or in software. If realised in hardware, the interfaces may be part of a so-called system ASIC including various functions of the apparatus, for example. However, the interfaces may also be distinct integrated circuits or at least partially consist of discrete components. If realised in software, the interfaces may be software modules, for example realised on a microcontroller along with other software modules.

The approach presented here also provides a vehicle, in particular an off-road vehicle, configured to interact with granular material in a working environment, wherein the vehicle comprises the apparatus presented herein.

What is also advantageous is a computer program product or computer program with program code which may be stored on a machine-readable carrier or storage medium, such as semiconductor storage, hard-disk storage or optical storage, and is used for executing, implementing and/or controlling the steps of the method according to one of the previously described embodiments, particularly when the program product or program is executed on a computer or an apparatus.

An embodiment may be used as an upstream part in a machine-learning tool chain. The upstream part concerns teaching the student from a heuristic oracle or teacher. Such an oracle may be used to create numerous realisations of valid scenarios for the student to learn an action distribution needed for the task, in particular the grading operation or assignment. After being trained in this way, a machine-learning system can then be put to downstream use as outlined in the following. Regarding an oracle for training a BC (Behavioural Cloning) and RL (Reinforcement Learning) agent from such a heuristic agent, for example, what is depicted is the manner in which the RL agent or student may be trained from the distribution learnt by the teacher. For example, an embodiment may be applicable to any off-road autonomous dozer application that includes learning trajectory planning from demonstrations.

Embodiments of the approach presented here are illustrated in the drawings and explained in greater detail in the subsequent description.

Figure 1    show schematic view of the proposed approach referred to as 'Privileged Behavioural Cloning';

Figure 2    show a schematic depiction of an off-road vehicle, in particular a bulldozer;

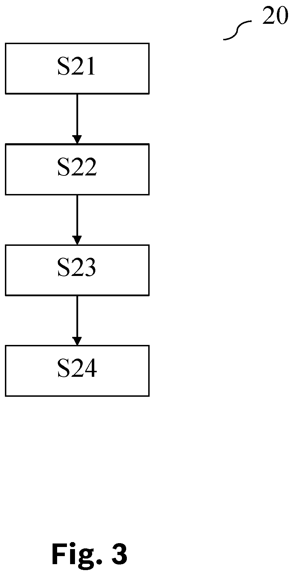

Figure 3    a flow chart for training a policy for controlling the off-road vehicle.

The task of training in simulation and deploying in the real world has been of much interest in the past years and is known as 'sim-to-real'. It can be divided into two main categories - dynamics and perception. The dynamics gap stems from the inability to precisely model the reaction of the system. This is tackled by solving a robust objective using methods such as dynamics randomization or adversarial training. Overcoming the perception gap is done by learning a mapping between the simulation and the real world or learning robust feature extractors. Comparing to previous work, the inventors create a simulation that closely mimics the real dynamics, thus enabling them to focus efforts on closing the visual sim-to-real gap. The inventors chose to minimize this gap by using a heightmap to represent the environment within the simulation. This is beneficial compared to RGB images as it better resembles the real-world data. Finally, the inventors leverage privileged information, available only during simulation, to train a policy capable of overcoming the inaccuracies of real-world data.

In the following, the task of an autonomous dozer, the setup, imitation learning and privileged learning is formally described.

A Partially-Observable Markov Decision Process (POMDP) consists of the tuple (S,O,A,P,R). While a state $s \in S$ contains all the required information, in practice agents are provided with an observation $o \in O$. Observations typically lack the sufficient statistics for optimality, e.g., noisy sensor measurements. when sensors are unable to provide precise readings. After the agent selects an action $a \in A$, the system transitions to the next state s' based on the transition kernel P(s'|s, a) and the agent is provided with a reward r(s, a). The goal of an agent is to learn a behavior policy $\pi$ (stochastic or deterministic) that maximizes the cumulative reward to go.

In order to tackle the task of autonomous grading, one can divide it into three main sub-tasks: the initialization task, the continuous task, and the edge task. Each stage exhibits different challenges and can be simulated and tested individually.

The state s consists of all the information required to obtain the optimal policy and determine the outcome of each action. Preferably, it includes the target area size, dozer's location within the area, heightmap of the target area, and full dozer trajectory up until the current time point.

The observation o is partial due to two reasons. First, the construction-site's dimensions may vary while the agent's field-of-view remains constant. Second, the measurement errors are common in real world sensors and often lead to missing or noisy information. Therefore, the agent is presented with a so-called EGO view of the current state. Meaning, a bounding box view around the current location of the dozer together with some measurement noise augmentations that mimic the real-world sensors.

The actions a can be given as follows. Dozer control can be performed both at the low level, i.e., providing rotation and velocity to the dozer, or at a higher level, e.g., selecting a destination coordinate. One can focus on macro-actions like Richard S Sutton, Doina Precup, and Satinder Singh. Between mdps and semi-mdps: A framework for temporal abstraction in reinforcement learning. Artificial intelligence, 112(1-2):181-211, such as coordinate selection, and leave the low-level control to classic control algorithms. Macro actions, also known as skills or options, are temporally extended actions and are known to help benefit learning especially when those are meaningful. Taking inspiration from how real operators behave, one can consider the "Start point and Push point" (abbreviated as 'SnP') action-set, see for example Masami Hirayama, Jose Guivant, Jayantha Katupitiya, and Mark Whitty. Path planning for autonomous bulldozers. Mechatronics, 2019 .

At each state, the agent selects two coordinates "push point" and "start point" denoted by (P, S), respectively. The dozer drives towards P, then reverses slightly further than it' s initial location, marked as B, and finally moves to the next starting position S. Hence, the action a can comprise the "push point" and "start point".

The transitions are determined by a dozer's dynamics and physical properties of soil and the environment.

While RL commonly focuses on maximizing a given reward function, in many real-world problems such a signal does not naturally exist. Imitation learning (IL; e.g. Ahmed Hussein, Mohamed Medhat Gaber, Eyad Elyan, and Chrisina Jayne. Imitation learning: A survey of learning methods. ACM Computing Surveys (CSUR), 50(2):1-35, 2017.) is the go-to approach for learning behavior policies in sequential decision-making problems that lack a reward function by utilizing expert demonstrations.

For the present invention, a behavior cloning (BC; e.g. Stephane Ross and Drew Bagnell. Efficient reductions for imitation learning. In Proceedings of the thirteenth international conference on artificial intelligence and statistics, pages 661-668. JMLR Workshop and Conference Proceedings, 2010) shall be used. In BC, an expert demonstrator collects data a priori; this data is then used offline to train a behavior policy using a supervised learning loss:

$$L(\theta; D) = E\big[\big||\pi_\theta(o) - a|\big|\,\big|\,(s, a) \sim D\,\big]$$

where $D = \{(o_0, \alpha_0),...\}$ is a dataset of demonstrations (observations and corresponding actions) provided by the expert and $||\cdot||$ is a distance metric, e.g., cross entropy.

In classic machine learning, the goal of a teacher (expert) is merely used to transfer knowledge to the student (agent). However, in many tasks the expert can obtain access to additional information that is not available during inference. This technique is known as privileged learning, see e.g. Vladimir Vapnik and Akshay Vashist. A new learning paradigm: Learning using privileged information. Neural networks, 22(5-6):544-557, 2009. The benefit of this scheme is in the ability to leverage the data-driven nature of machine learning models allowing them to learn robust generalizable estimators.

The inventors propose to focus on creating a physically realistic simulation environment for rapid training and evaluation. Although it is possible to engineer a reward function that may lead to satisfactory behavior, for the grading task such a reward function usually does not exist a priori. Therefore, it is preferable to focus on imitation learning techniques. Specifically, designing a robust imitation learning method for coping with real world imperfections.

The simulation is preferably modeled such that each sand pile is initially defined as a Multivariate Gaussian Distribution with two variables (x, y). These variables are the cartesian coordinates of the height map. For more details about the simulation by Multivariate Gaussian Distribution of the sand piles, see DE 10 2021 211152.

The baseline algorithm, inspired by the publication Masami Hirayama, Jose Guivant, Jayantha Katupitiya, and Mark Whitty. Path planning for autonomous bulldozers, will be referred to as the baseline. The baseline uses classic edge detection techniques for sand-pile recognition. After recognizing the sand piles it plans 2 way-points - P and S. P is selected to ensure that the blade, which pushes the soil, does not reach full capacity. Thus, no side spillage or slippage of the tracks occurs. Specifically, P is selected based on the nearest sand pile, such that it fills approximately 50% of the blade, approaching the nearest sand pile from the side. During the first stroke taken to reach P the dozer moves forward in a straight line. As the dozer is incapable of reversing on un-even ground, the B-point is reached by reversing in the same path it previously drove, yet slightly further than where it started (to minimize the rotation angle needed to reach S). Finally, after reaching B, the dozer rotates and moves towards the next starting position - the S-point. This point is selected at the frontier of the nearest sand pile. This logic closely mimics the behavior of a human driver, efficiently grading an entire area and takes into consideration the physical limitations of the dozer's movement.

The basis for utilizing privileged learning techniques is in the understanding that the baseline operates very well in a clean simulation environment (i.e., no noise or inaccuracies). Training using a simulator rather than the real world is beneficial, as it allows the usage of otherwise non-available information. For instance, while the real-world observations are noisy, simulations can generate both scenarios with perfect information and real-world measurement noises.

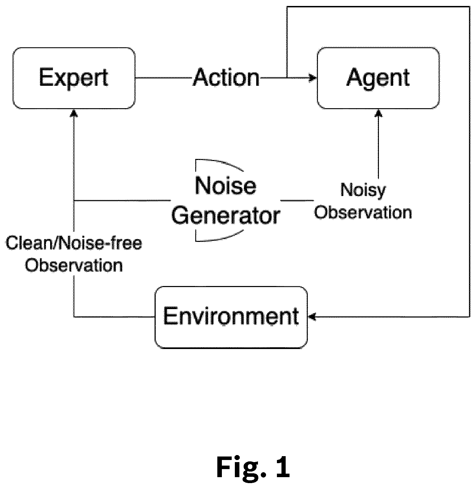

The proposed 'Privileged Behavioural Cloning' technique is schematically presented in Fig. 1 and essentially involves two steps. The agent is initialized at some random initial state and the baseline algorithm solves the problem accordingly. Throughout its entire episode, the baseline is provided perfect information, i.e., noiseless observations. However, the observations provided to the agent for behavior cloning are augmented to resemble the noise it would exhibit in the real world. More precisely, an expert or the baseline algortihm interacts with an environment while being provided clean observations, this can either be from a simulated environment where the expert is provided noise-free data, or a human driving a real dozer. While the agent is given the precise action performed by the expert, it only has access to the noisy, imperfect, observations.

As the agent is given a more realistic noisy observation, it is required to perform robust feature extraction and learn the correct actions based on the understanding of important information in the heightmap. Preferably, the agent is provided an observation with multiple real-world inaccuracies. These can comprise one or a plurality of the following inaccuracies: low-volume piles that are spread randomly around the target area, depth measurement noise and occlusions. Specifically, in privileged BC, the dozer optimizes the following loss:

$$L(\theta; D) = E\big[||\pi_\theta(N(o)) - a|| \,\big|\, (s, a) \sim D\,\big]$$

where o is the clean observation as seen by the baseline, $N(o)$ is the observation with added noise and a is the action performed by the baseline.

In order to train the BC agent, one can sample 200 random initial states in simulation and solve those tasks using the baseline. During the baseline execution, the observation-action sets ($o_t$, $a_t$) are recorded. These sets are then fed to the BC agents using the losses presented above with and without added perturbations, respectively. The training procedure can be performed using batches of 128 sets for 2000 epochs.

As the observation can be a height map of the current dozer's ego-view and the actions are two coordinates within this view, preferably an end-to-end convolutional neural network for the BC agent training is used. For efficiency purposes, one can use dilated convolutions that enable a large receptive field with a shallower network. The input and output size are identical (height x width), with the exception that the output layer has 2 channels - one for each action in the tuple (P, S).

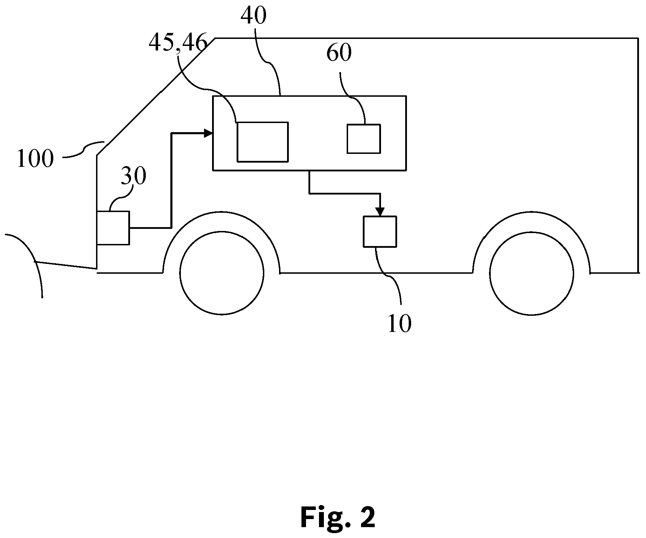

Shown in figure 2 is one embodiment of an off-road vehicle, in particular a bulldozer 100. The bulldozer 100 comprises an actuator 10, which interacts with a control system 40. At preferably evenly spaced distances, a sensor 30 senses a condition of the actuator system and/or a state of an environment around the bulldozer 100. The sensor 30 may comprise several sensors. Preferably, sensor 30 is an optical sensor that takes images of the environment 20. An output signal of sensor 30 (or, in case the sensor 30 comprises a plurality of sensors, an output signal S for each of the sensors) which encodes the sensed condition is transmitted to the control system 40.

Possible sensors include but are not limited to gyroscopes, accelerometers, force sensors, cameras, radar, LiDAR, angle encoders, etc. Note that oftentimes sensors do not directly measure the state of the system but rather observe a consequence of the state, e.g. a camera detects an image instead of directly measuring the relative position of the vehicle to another object. However, it is possible to filter the state from high-dimensional observations like images or LiDAR measurements.

Thereby, control system 40 receives a stream of sensor signals. It then computes a series of actuator control commands A depending on the stream of sensor signals, which are then transmitted to actuator 10.

Control system 40 receives the stream of sensor signals S of sensor 30 in an optional receiving unit. Receiving unit transforms the sensor signals S into a current state signal. Alternatively, in case of no receiving unit, each sensor signal may directly be taken as a current state signal.

The state signal is then passed on to an optimized policy 60, which may, for example, be given by an artificial neuronal network.

The optimized policy 60 is parametrized by parameters $\theta$, which are stored in and provided by parameter storage.

The optimized policy 60 determines output action signals from current state signal. The action signal is transmitted to an optional conversion unit, which converts the action signal into the control commands. Actuator control commands are then transmitted to actuator 10 for controlling actuator 10 accordingly. Alternatively, output signals y may directly be taken as control commands A.

Actuator 10 receives actuator control commands, is controlled accordingly and carries out an action corresponding to actuator control commands. Actuator 10 may comprise a control logic which transforms actuator control command A into a further control command, which is then used to control actuator 10.

Furthermore, control system 40 may comprise a processor 45 (or a plurality of processors) and at least one machine-readable storage medium 46 on which instructions are stored which, if carried out, cause control system 40 to carry out a method for controlling the bulldozer 100 depending on the optimized policy.

Preferably, the off-road vehicle is an at least partially autonomous off-road vehicle (e.g. dozer), which is partly controlled by the policy.

Fig. 2 shows a flowchart of an embodiment of a method 20 for learning a policy (60) configured to control an off-road vehicle for a grading task, wherein the off-road vehicle is configured to interact with granular material in a working environment of the off-road vehicle.

The method starts with step S21. Herein, a simulation of the working environment is provided. The simulation is suited to determine depending on at least an inputted action ($a$) of the off-road vehicle of a set of possible actions and a state of the environment ($s_t$) an output, wherein the output characterizes the environment ($s_{t+1}$) after carrying out the inputted action. Preferably, the simulation by Multivariate Gaussian Distribution of the sand piles is used.

Afterwards, it follows a generation (S22) of a plurality of random initial states of the working environment.

Then (S23), a baseline method is applied on the initial states to solve the grading task with the simulation, wherein while solving the grading task, tuples of selected actions and observed states ($s_t$, $a_t$) are record-

ed.

Afterwards, it follows a behavioural cloning (S24) on the recodes tuples to optimize a parametrization of the policy with the objective to imitate the behaviour of the baseline method. A plurality of the recorded states is provided with added perturbations to obtain the observations $N(o_t)$.

In a further embodiment, the obtained policy can be further optimized via reinforcement learning. More precisely, the policy can be used as a baseline for reinforcement learning (RL). This can improve further generalization capabilities of the policy. Thereby, the policy can eventually out-perform the expert e.g., in terms of reduced time consumption and improved performance, e.g., leaving fewer sand bumps that were not spread.

Wherever an embodiment includes an "and/or" link between a first feature and a second feature, this is to mean that the embodiment comprises both the first feature and the second feature in a first variant and either the first feature or the second feature in a further variant.

**Claims**

1. A computer-implemented method (20) for learning a policy (60) to control an off-road vehicle (100) for a grading task, wherein the off-road vehicle (100) is configured to interact with granular material in a working environment of the off-road vehicle (100), comprising the following steps:

   i. Providing (S21) a simulation of the working environment, wherein the simulation is suited to determine depending on at least an inputted action ($a$) of the off-road vehicle (100) and a state of the environment ($s_t$) an output, wherein the output characterizes the environment ($s_{t+1}$) after carrying out the inputted action;
   ii. Generating (S22) a plurality of initial states of the working environment;
   iii. Applying (S23) a baseline method to solve the grading task for each of the initial states with the simulation, wherein while solving the grading task, tuples of selected actions and obtained states ($s_t, a_t$) are recorded; and
   iv. Executing (S24) a behavioural cloning algorithm on the recoded tuples to optimize a parametrization of the policy (60) with the objective to imitate the behaviour of the baseline method, wherein a plurality of the recorded states is provided with added perturbations.

2. The method according to claim 1, wherein the behavior cloning algorithm optimizes a loss function by means of supervised learning, wherein the loss function characterizes a difference between recorded actions ($a$) for given states ($s$) of the recorded tuples and chosen actions ($\pi_\theta(N(o))$) by the policy for the perturbated states ($N(o)$) or for the given states ($s$).

3. The method according to any of the preceding claims, wherein the states are perturbated by modifying volumes of piles, spread randomly the piles around their centre of gravity, depth measurement noise and/or occlusions of piles.

4. The method according to any of the preceding claims, wherein the simulation is a simulation of the working environment, wherein each pile of granular material is initially modeled as a Multivariate Gaussian Distribution.

5. The method according to any of the preceding claims, wherein the grading task is divided into three subtasks, wherein for each of the sub-tasks a policy is optimized by the step of executing (S24) behavioural cloning on recorded tuples of the respective subtask.

6. The method according to one of the preceding claims, wherein the simulation receives further physical values as variables comprise a height of each pile of the granular material, a volume of each pile of the granular material, a distance between piles of the granular material, a spreading parameter of the granular material and options of movement of the vehicle (100) including effects on the granular material associated with each of the set of actions.

7. Method according to any of the preceding claims, wherein the optimized policy (60) is used for controlling at least one actor of the vehicle (100) by means of a control signal determined using the policy.

8. Apparatus, configured to carry out the steps of the method according to any one of the preceding claims.

9. A computer program comprising instructions which, when the program is executed by a computer, cause the computer to carry out the method of claim 1- 7.

10. A computer-readable medium comprising instructions which, when executed by a computer, cause the computer to carry out the computer program according to claim 9.

**Fig. 1**

Fig. 2

20

```
┌──────────────┐
│     S21      │
└──────────────┘
        │
        ▼
┌──────────────┐
│     S22      │
└──────────────┘
        │
        ▼
┌──────────────┐
│     S23      │
└──────────────┘
        │
        ▼
┌──────────────┐
│     S24      │
└──────────────┘
```

**Fig. 3**

Europäisches
Patentamt

European
Patent Office

Office européen
des brevets

# EUROPEAN SEARCH REPORT

Application Number

EP 22 16 8442

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L. FAN ET AL.: "SECANT: Self-Expert Cloning for Zero-Shot Generalization of Visual Policies", ARXIV.ORG, CORNELL UNIVERSITY LIBRARY, 201 OLIN LIBRARY CORNELL UNIVERSITY ITHACA, NY 14853, 17 June 2021 (2021-06-17), XP081991256, * abstract * * figure 2 * * sect. 3, 4 and 5.3 * ----- | 1-10 | INV. G06N3/00 G06N3/08 G06N7/00 ADD. G06N3/04 G05D1/00 |
| A | M. NAKATANI ET AL.: "Autonomous Grading Work Using Deep Reinforcement Learning Based Control", IECON 2018 - 44TH ANNUAL CONFERENCE OF THE IEEE INDUSTRIAL ELECTRONICS SOCIETY, IEEE, 21 October 2018 (2018-10-21), pages 5068-5073, XP033483921, DOI: 10.1109/IECON.2018.8591189 [retrieved on 2018-12-26] * the whole document * ----- | 1-10 | |
| A | A. SAURET ET AL.: "Bulldozing of granular material", ARXIV.ORG, 1 May 2014 (2014-05-01), XP055966188, * page 17 * ----- | 4 | TECHNICAL FIELDS SEARCHED (IPC) G06N |

The present search report has been drawn up for all claims

| Place of search | Date of completion of the search | Examiner |
|---|---|---|
| The Hague | 28 September 2022 | Millet, Guillaume |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102022202689

**Non-patent literature cited in the description**

- **MASAMI HIRAYAMA ; JOSE GUIVANT ; JAYANTHA KATUPITIYA ; MARK WHITTY.** Path planning for autonomous bulldozers. *Mechatronics,* 2019
- **AHMED HUSSEIN ; MOHAMED MEDHAT GABER ; EYAD ELYAN ; CHRISINA JAYNE.** Imitation learning. *A survey of learning methods. ACM Computing Surveys (CSUR),* 2017, vol. 50 (2), 1-35
- **STEPHANE ROSS ; DREW BAGNELL.** Efficient reductions for imitation learning. In Proceedings of the thirteenth international conference on artificial intelligence and statistics. *JMLR Workshop and Conference Proceedings,* 2010, 661-668
- **VLADIMIR VAPNIK ; AKSHAY VASHIST.** A new learning paradigm. *Learning using privileged information. Neural networks,* 2009, vol. 22 (5-6), 544-557